# EUROPÄISCHE PATENTANMELDUNG

(11) **EP 4 317 030 A1**
(43) Veröffentlichungstag der Anmeldung: **07.02.2024**
(21) Anmeldenummer: 23187642.6
(22) Anmeldetag: 25.07.2023
(51) Int. Cl.: B65G 11/20

(54) **VORRICHTUNG ZUM TRANSPORT VON OBJEKTEN**

(30) Priorität: 05.08.2022 DE 102022119786
(71) Anmelder: Deutsche Post AG, 53113 Bonn (DE)
(72) Erfinder: Loh, Hillar, 53859 Niederkassel (DE)
(74) Vertreter: dompatent von Kreisler Selting Werner - Partnerschaft von Patent- und Rechtsanwälten mbB

(57) **Zusammenfassung**

Vorrichtung zum Transport von Objekten mit einem ersten Förderelement und einem zweiten Förderelement, wobei das erste Förderelement über das zweite Förderelement hervorsteht und durch das erste Förderelement eine erste Förderfläche gebildet wird und durch das zweite Förderelement eine zweite Förderfläche gebildet wird, wobei das erste Förderelement beweglich ist in Abhängigkeit vom Gewicht des zu fördernden Objekts, so dass ein erstes Objekt mit einem ersten Gewicht auf der ersten Förderfläche bewegt wird und ein zweites Objekt mit einem zweiten Gewicht auf der zweiten Förderfläche bewegt wird und das zweite Gewicht größer ist als das erste Gewicht.

## Beschreibung

Die vorliegende Erfindung betrifft eine Vorrichtung zum Transport von Objekten wie beispielsweise Packstücken, Paketen, Stückgut oder Sendungen. Insbesondere betrifft die vorliegende Erfindung eine Vorrichtung, welche Teil eines Sorters zur Sortierung der Objekte sein kann.

Mit steigender Anzahl von Sendungen und zu transportierenden Gütern in der Logistik steigt auch die Anforderung an die Geschwindigkeit der Sortierung. Insbesondere ist es wünschenswert, bei der Sortierung eine hohe Bewegungsgeschwindigkeit der Objekte zu erreichen, um somit einen hohen Durchsatz an Objekten sortieren zu können. Insbesondere bei der Sortierung von Packstücken tritt jedoch hinzu, dass einzelne Packstücke unterschiedlich ausgebildet sein können und somit beispielsweise ein Gewicht zwischen 10 g und 32 kg aufweisen können. Dennoch sind diese Objekte auf die gleiche Weise innerhalb der Sortierung zu bewegen. Hierbei stellt insbesondere die Abbremsung der Objekte eine Herausforderung dar, da einerseits die leichten Objekte wenig abgebremst werden sollen, wohingegen schwere Objekte stark abgebremst werden müssen, um beispielsweise einen unerwünschten Aufprall zu vermeiden.

Insbesondere wenn einzelne Abschnitte des Sorters bzw. Sortiersystems als Rutsche ausgebildet sind, d. h. die Objekte im Wesentlichen aufgrund ihrer Gewichtskraft bewegt werden, ist es wünschenswert, leichte Objekte wenig oder gar nicht abzubremsen, wohingegen eine zu starke Beschleunigung schwerer Objekte unerwünscht ist bzw. eine starke Abbremsung erforderlich ist.

Aufgabe der vorliegenden Erfindung ist es somit, eine Vorrichtung zum Transport von Objekten zu schaffen, welche Objekte mit unterschiedlichen Gewichten zuverlässig befördert.

Die Aufgabe wird gelöst durch eine Vorrichtung gemäß Anspruch 1 sowie einen Sorter gemäß Anspruch 15.

Die erfindungsgemäße Vorrichtung zum Transport von Objekten weist ein erstes Förderelement und ein zweites Förderelement auf, wobei das erste Förderelement über das zweite Förderelement hervorsteht. Durch das erste Förderelement ist eine erste Förderfläche gebildet und durch das zweite Förderelement wird eine zweite Förderfläche gebildet. Dabei ist die erste Förderfläche von der zweiten Förderfläche verschieden. Insbesondere steht das erste Förderelement in eine Richtung senkrecht zu den Förderflächen über das zweite Förderelement hervor. In anderen Worten sind die erste Förderfläche und die zweite Förderfläche auf unterschiedlichen Höhen angeordnet, wobei die erste Förderfläche über der zweiten Förderfläche angeordnet ist. Durch die Förderflächen wird eine Fläche ausgebildet, über die die Objekte transportiert bzw. gefördert werden. Dabei ist erfindungsgemäß das erste Förderelement beweglich in Abhängigkeit vom Gewicht des zu befördernden Objekts, so dass ein erstes Objekt mit einem ersten Gewicht auf der ersten Förderfläche bewegt wird und ein zweites Objekt mit einem zweiten Gewicht auf der zweiten Förderfläche bewegt wird, wobei das zweite Gewicht größer ist als das erste Gewicht. Erfindungsgemäß ist somit das erste Förderelement durch das Gewicht des Objekts herunterdrückbar, sodass das Objekt auf der zweiten Förderfläche befördert und transportiert wird, sofern es ein ausreichendes Gewicht aufweist, um das erste Förderelement herunterzudrücken. Hierbei kann ein Grenzwert definiert werden für das Gewicht, ab dem ein Objekt mit einem Gewicht größer oder gleich diesem Grenzwert auf der zweiten Förderfläche befördert und transportiert wird, wohingegen Objekte mit einem Gewicht kleiner als dieser Grenzwert auf der ersten Förderfläche gefördert und transportiert werden. Somit werden durch das erste Förderelement und das zweite Förderelement für unterschiedliche Objekte bzw. Objekte mit einem unterschiedlichen Gewicht, jeweils unterschiedliche Förderflächen zur Verfügung gestellt, wobei die jeweiligen Förderflächen ausgebildet sein können, einen gewichtsangepassten Transport der Objekte bereitzustellen.

Insbesondere weisen das erste Förderelement und das zweite Förderelement unterschiedliche Bewegungswiderstände auf, wobei insbesondere das zweite Förderelement einen höheren Bewegungswiderstand aufweist als das erste Förderelement. Leichte Objekte, welche auf dem ersten Förderelement befördert und transportiert werden, erfahren somit lediglich einen geringen Bewegungswiderstand, wohingegen schwere Objekte, welche das erste Förderelement herunterdrücken und somit auf der zweiten Förderfläche befördert und transportiert werden, einen höheren Bewegungswiderstand erfahren und hierdurch effektiv abgebremst werden können. Der Bewegungswiderstand beschreibt dabei einen Widerstand, welcher beispielsweise als Bremswirkung auf das jeweilige Objekt übertragen wird und die Bewegung des Objekts verlangsamt. Der Bewegungswiderstand kann dabei erzeugt werden durch Reibung, Rollenwiderstand oder dergleichen.

Vorzugsweise handelt es sich bei der Vorrichtung um eine Rutsche. Hierbei ist die Vorrichtung geneigt gegenüber der Horizontalen, sodass eine Bewegung der Objekte in Richtung der Förderrichtung im Wesentlichen durch deren Schwerkraft erfolgt. Dies ist jedoch nicht zwingend beschränkt auf eine gleitende Bewegung, sondern umfasst jedenfalls andere Formen, bei denen eine Bewegung der Objekte aufgrund ihrer Gewichtskraft ermöglicht wird, wie beispielsweise Rollenbahnen oder das Gleiten über Lamellen und Borsten.

Vorzugsweise weisen die Objekte ein Gewicht zwischen 10 g und 32 kg auf.

Vorzugsweise ist die Vorrichtung ausgebildet, um Objekte mit unterschiedlichem Gewicht zu befördern.

Vorzugsweise ist die Vorrichtung ausgebildet, um für Objekte eines ersten Gewichts eine erste Bremswirkung und für Objekte eines zweiten Gewichts eine zweite Bremswirkung zu erzeugen. Hierbei ist das erste Gewicht kleiner als ein vorgegebener Grenzwert und das zweite Gewicht größer als der vorgegebene Grenzwert. Insbesondere ist die erste Bremswirkung kleiner als die zweite Bremswirkung.

Vorzugsweise sind das erste Förderelement und das zweite Förderelement in Förderrichtung nebeneinander angeordnet. Hierdurch erstrecken sich die ersten Förderelemente und die zweiten Förderelemente entlang der Bewegungsrichtung der Objekte auf der Vorrichtung. Alternativ hierzu sind das erste Förderelement und das zweite Förderelement senkrecht zur Förderrichtung angeordnet, sodass das erste Förderelement und das zweite Förderelement quer über die Vorrichtung verlaufen und somit das Objekt insbesondere bei einer Vielzahl von ersten Förderelementen und/oder einer Vielzahl von zweiten Förderelementen wechselnd über erste Förderelemente und zweite Förderelemente bewegt wird.

Vorzugsweise ist das erste Förderelement und/oder das zweite Förderelement V-förmig insbesondere in Förderrichtung angeordnet. Dabei kann die Spitze des V-förmigen ersten Förderelements bzw. zweiten Förderelements mittig auf der Vorrichtung liegen oder von der Mitte versetzt sein. Eine V-förmige Anordnung der ersten Förderelemente und/oder der zweiten Förderelemente hat hierbei den Effekt, dass die Objekte mittig auf der Vorrichtung ausgerichtet werden können.

Vorzugsweise weist die Vorrichtung eine Vielzahl von ersten Förderelementen und/oder eine Vielzahl von zweiten Förderelementen auf. Insbesondere sind die ersten Förderelemente und die zweiten Förderelemente dabei abwechselnd angeordnet.

Vorzugsweise weist das erste Förderelement und/oder das zweite Förderelement eine Breite auf von weniger als 10 cm, bevorzugt weniger als 5 cm und besonders bevorzugt von weniger als 1 cm. Dabei bezeichnet die Breite die Dimension der geringsten Erstreckung des ersten Förderelement bzw. des zweiten Förderelements. Somit wird das erste Förderelement und/oder das zweite Förderelement ausgebildet als Streifen mit einer entsprechenden Breite, welche entweder entlang der Förderrichtung der Vorrichtung verlaufen, quer zur Förderrichtung oder V-förmig angeordnet sind.

Vorzugsweise beträgt die Breite des ersten Förderelements und/oder des zweiten Förderelements weniger als die Mindestgröße der zu transportierenden Objekte. Hierdurch wird sichergestellt, dass die Objekte nicht zwischen die ersten Förderelemente und zweiten Förderelemente gelangt und sich hierbei verkanten. Vielmehr erfolgt eine gleichmäßige Förderung der Objekte auf entweder der ersten Förderfläche oder der zweiten Förderfläche, je nach Gewicht des Objekts.

Vorzugsweise steht das erste Förderelement um weniger als 10 mm, bevorzugt weniger als 5 mm und besonders bevorzugt weniger als 2 mm über das zweite Förderelement hervor. Durch den geringen Überstand wird einerseits sichergestellt, dass Objekte, welche auf der ersten Förderfläche befördert werden und auf dem ersten Förderelement aufliegen, nicht in Kontakt kommen mit dem zweiten Förderelement, welches die zweite Förderfläche definiert. Gleichzeitig wird jedoch durch den geringen Überstand des ersten Förderelementes über das zweite Förderelement ein Verkanten der Objekte an den Übergängen vom ersten Förderelement zum zweiten Förderelement verringert bzw. ganz vermieden.

Vorzugsweise sind alle ersten Förderelemente auf einer Höhe angeordnet und definieren hierbei die erste Förderfläche.

Vorzugsweise sind alle zweiten Förderelemente auf einer Höhe angeordnet und definieren hierbei die zweite Förderfläche.

Vorzugsweise weist das erste Förderelement ein Federelement auf, wobei das erste Förderelement entgegen der Federkraft des Federelements insbesondere durch das Gewicht des jeweiligen Objekts herunterdrückbar ist, insbesondere unterhalb oder auf die Ebene der zweiten Förderfläche. Insbesondere erfolgt das Herunterdrücken senkrecht zu der ersten Förderfläche bzw. zweiten Förderfläche. Hierbei kann durch die Federkraft der Grenzwert eingestellt werden, ab dem ein Objekt mit einem Gewicht gleich oder größer dieses Grenzwerts auf der zweiten Förderfläche bewegt wird und mit einem Gewicht kleiner als dieser Grenzwert auf der ersten Förderfläche befördert wird. Insbesondere handelt es sich bei dem Federelement um eine Feder, ein Elastomer oder dergleichen.

Vorzugsweise weist die Vorrichtung weitere Förderelemente auf, wobei durch die weiteren Förderelemente weitere Förderflächen definiert werden. Hierbei kann insbesondere auch das zweite Förderelement bewegbar sein und insbesondere ein Federelement aufweisen, wobei das zweite Förderelement entgegen der Federkraft des weiteren Förderelements herunterdrückbar ist. Dabei ist die Federkraft des Federelements des ersten Förderelements kleiner als die Federkraft des Federelements des zweiten Förderelements. Objekte mit einem ersten Gewicht werden somit auf der ersten Förderfläche befördert. Objekte mit einem zweiten Gewicht drücken sodann das erste Förderelement entgegen der Federkraft herunter und werden somit auf der zweiten Förderfläche befördert. Objekte mit einem dritten Gewicht drücken das zweite Förderelement entgegen der Federkraft herunter und werden somit auf der weiteren Förderfläche befördert. Hierbei ist das dritte Gewicht größer als das zweite Gewicht und das zweite Gewicht größer als das erste Gewicht.

Vorzugsweise weist das erste Förderelement mindestens eine Rolle oder Walze auf. Über diese Rolle oder Walze kann das Objekt auf der ersten Förderfläche befördert werden. Insbesondere weist das erste Förderelement eine Vielzahl von Rollen oder eine Vielzahl von Walzen auf. Insbesondere weist das erste Förderelement eine Kombination von mindestens einer oder mehreren Rollen und mindestens einer oder mehreren Walzen auf.

Vorzugsweise weist das erste Förderelement mindestens eine Lamelle auf, über die das Objekt rutscht und hierbei abgebremst wird. Insbesondere weist das erste Förderelement eine Vielzahl von Lamellen auf.

Vorzugsweise weist das erste Förderelement Borsten auf, über die das Objekt auf der ersten Förderfläche befördert werden kann. Insbesondere weisen die Borsten des ersten Förderelements ein Elastizitätsmodul (E-Modul) auf, welches derart gewählt ist, dass Objekte mit einem Gewicht unterhalbdes Grenzwerts auf den Borsten des ersten Förderelements befördert werden, wohingegen Objekte mit einem Gewicht über dem Grenzwert die Borsten umbiegen und somit das Objekt auf der zweiten Förderfläche befördert wird.

Vorzugsweise weist das zweite Förderelement mindestens eine Rolle, mindestens eine Lamelle, Borsten oder eine Gleitfläche auf. Weist das zweite Förderelement mindestens eine Rolle auf, ist der durch den Rollwiderstand des zweiten Förderelement erzeugte Bewegungswiderstand größer als der Bewegungswiderstand (Reibungswiderstand, Rollwiderstand) des ersten Förderelements. Ist dabei das zweite Förderelement ausgebildet als Lamelle oder Borsten, können die Lamellen oder Borsten aus einem Material sein, welche eine höhere Reibung aufweist und somit einen höheren Bewegungswiderstand erzeugt als das erste Förderelement. Ist das zweite Förderelement als Gleitfläche ausgebildet, kann die Gleitfläche ausgebildet sein durch ein Material mit einem hohen Reibungswiderstand wie beispielsweise Gummi, sodass für Objekte mit einem hohen Gewicht, welche auf dem zweiten Förderelement befördert werden, eine effektive Bremswirkung durch die Reibung der Gleitfläche erzeugt wird.

Vorzugsweise weist das erste Förderelement erste Borsten einer ersten Länge auf und das zweite Förderelement zweite Borsten einer zweiten Länge, wobei die ersten Borsten ein E-Modul aufweisen, welches kleiner als das E-Modul der zweiten Borsten. Dabei ist die erste Länge größer als die zweite Länge, sodass die ersten Borsten über die zweiten Borsten hervorstehen. Leichte Objekte werden somit auf den ersten Borsten des ersten Förderelements befördert. Schwere Objekte biegen jedoch aufgrund des E-Moduls die ersten Borsten um, sodass das schwere Objekt auf den zweiten Borsten befördert wird.

Vorzugsweise sind die ersten Borsten und zweiten Borsten aus einem Material oder von einem Material umgeben, was einen Bewegungswiderstand erzeugt, insbesondere durch Reibung. Dabei ist das Material der ersten Borsten und/oder das Material der zweiten Borsten so gewählt, dass der Bewegungswiderstand, der durch die ersten Borsten erzeugt wird, kleiner ist als der Bewegungswiderstand, der durch die zweiten Borsten erzeugt wird.

Vorzugsweise können dritte Borsten mit einer dritten Länge vorgesehen sein, wobei die dritte Länge kleiner ist als die zweite Länge und die dritten Borsten ein größeres E-Modul aufweisen als die zweiten Borsten, sodass bei schweren Objekten die ersten Borsten sowie die zweiten Borsten gebogen werden können und das schwere Objekt auf den dritten Borsten befördert wird. Weitere Borsten bzw. Förderelemente können vorgesehen sein, um eine Abstufung für Objekte unterschiedlichen Gewichts vorzusehen. Dabei können die dritten Borsten wiederum ein Material aufweisen, was einen noch größeren Bewegungswiderstand erzeugt als die zweiten Borsten.

Vorzugsweise sind die ersten Borsten und die zweiten Borsten nebeneinander angeordnet, wie vorstehend hinsichtlich dem ersten Förderelement und dem zweiten Förderelement beschrieben. Alternativ hierzu sind die ersten Borsten und die zweiten Borsten über die Förderfläche verteilt angeordnet.

Weiterhin betrifft die vorliegende Erfindung einen Sorter zum Sortieren von Objekten mit einer Vorrichtung wie vorstehend beschrieben. Bei einem solchen Sorter bzw. Sortiersystem handelt es sich um ein Logistiksortier- und Verteilsystem. Dabei kann der Sorter mehr als eine Vorrichtung wie vorstehend beschrieben aufweisen. Dabei können die erfindungsgemäßen Vorrichtungen identisch oder unterschiedlich ausgebildet sein.

Nachfolgend wird die Erfindung anhand bevorzugter Ausführungsformen unter Bezugnahme auf die beigefügten Zeichnungen näher erläutert.

Es zeigen:
- Figur 1: eine schematische Darstellung der vorliegenden Erfindung,
- Figur 2A: eine Detailansicht einer Ausführungsform der vorliegenden Erfindung,
- Figur 2B: eine Detailansicht einer Ausführungsform der vorliegenden Erfindung,
- Figur 2C: eine Detailansicht einer Ausführungsform der vorliegenden Erfindung,
- Figur 3: eine Schnittansicht der vorliegenden Erfindung,
- Figur 4A: eine Schnittansicht der vorliegenden Erfindung mit einem leichten Objekt,
- Figur 4B: eine Schnittansicht der vorliegenden Erfindung mit einem schweren Objekt,
- Figur 5A: eine weitere Ausführungsform der vorliegenden Erfindung,
- Figur 5B: eine weitere Ausführungsform der vorliegenden Erfindung,
- Figur 6A: eine weitere Ausführungsform der vorliegenden Erfindung mit einem leichten Objekt,
- Figur 6B: die Ausführungsform der Figur 6A mit einem schweren Objekt,
- Figur 6C: die Ausführungsform der Figur 6A in einer ersten Konfiguration und
- Figur 6D: die Ausführungsform der Figur 6A in einer weiteren Konfiguration.

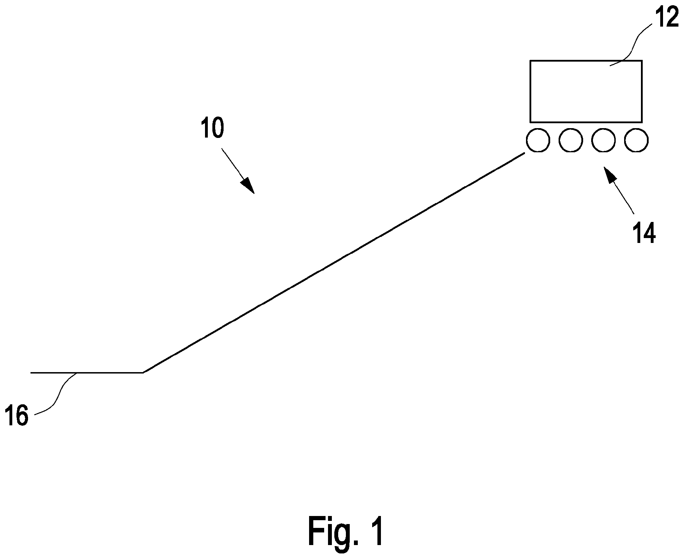

Die erfindungsgemäße Vorrichtung gezeigt in der Figur 1 kann Teil eines Sorters sein und ist insbesondere, wie exemplarisch in der Figur 1 dargestellt, als Rutsche ausgebildet. Wie in Figur 1 exemplarisch dargestellt, wird ein Objekt 12 über ein Förderband oder Rollenband 14 transportiert und gelangt zur Vorrichtung 10, rutscht über die Vorrichtung 10 und gelangt zu einem Entnahmepunkt 16. Hierbei muss das Objekt 12, wenn es über die Vorrichtung 10 transportiert wird, gebremst werden, und dabei ist es erforderlich, dass schwere Objekte stärker gebremst werden als leichte Objekte. Insbesondere sollen leichte Objekte unter Umständen überhaupt nicht gebremst werden, da diese andernfalls innerhalb der Vorrichtung 10 steckenbleiben können und hierdurch der Durchsatz an Objekten 12 reduziert wird. Vorzugsweise handelt es sich bei den Objekten um Packstücke, Pakete, Stückgut oder Sendungen. Insbesondere sind die Objekte 12, welche über die Vorrichtung 10 befördert werden, unterschiedlich ausgebildet und können somit beispielsweise ein Gewicht zwischen 10 g und 32 kg aufweisen, wodurch eine deutlich unterschiedliche Bremswirkung erzeugt werden muss.

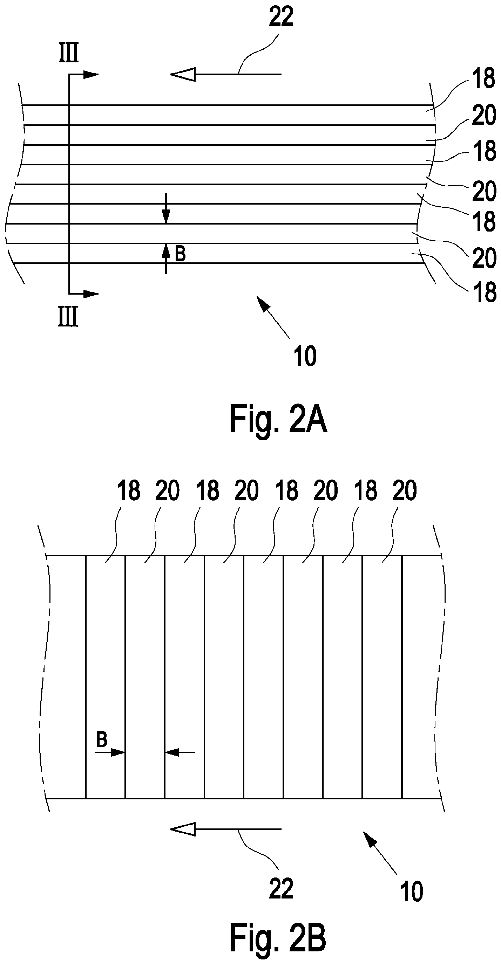

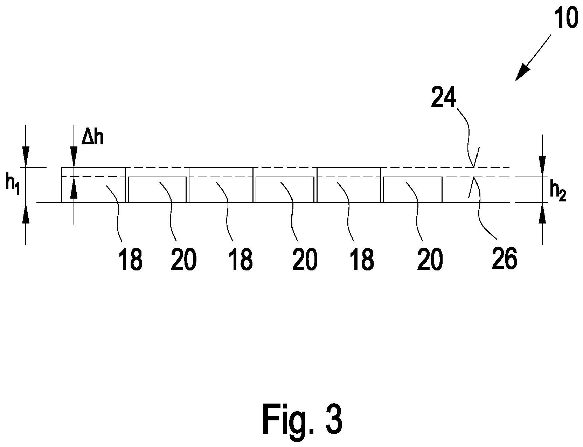

Im Folgenden wird eingegangen auf die Figuren 2A-C, 3 und 4A-B. Die erfindungsgemäße Vorrichtung weist ein erstes Förderelement 18 auf, sowie ein zweites Förderelement 20. Wie in der Figur 3 gezeigt steht dabei das erste Förderelement 18 über das zweite Förderelement 20 hervor. Die ersten Förderelemente 18 können eine Höhe h₁ aufweisen. Die zweiten Förderelemente 20 können eine Höhe h₂ aufweisen Durch das erste Förderelement 18 wird eine erste Förderfläche 24 gebildet. Durch das zweite Förderelement 20 wird eine zweite Förderfläche 26 gebildet. Wie in den Figuren gezeigt, weist die Vorrichtung dabei eine Vielzahl von ersten Förderelementen 18 und eine Vielzahl von zweiten Förderelementen 20 auf. Dabei beträgt der Abstand Δ*h* zwischen der ersten Förderfläche 24 und der zweiten Förderfläche 26 weniger als 10 mm, bevorzugt weniger als 5 mm und besonders bevorzugt weniger als 2 mm. Ein Verkanten der Objekte 12 beim Übergang von dem ersten Förderelement 18 zum zweiten Förderelement 20 wird aufgrund des geringen Abstands Δ*h* reduziert.

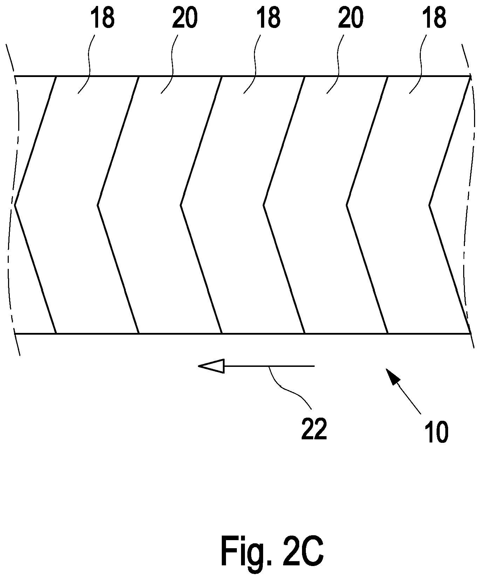

Wie in Figur 2A und 2B dargestellt, können dabei die ersten Förderelemente 18 und zweiten Förderelemente 20 entlang der Förderrichtung 22 angeordnet sein. Insbesondere sind die ersten Förderelemente 18 und die zweiten Förderelemente 20 abwechselnd zueinander angeordnet. Alternativ hierzu, wie gezeigt in der Figur 2B, sind die ersten Förderelemente 18 und die zweiten Förderelemente 20 abwechselnd senkrecht zur Förderrichtung 22 angeordnet. Alternativ hierzu, gezeigt in der Figur 2C, sind die ersten Förderelemente 18 und/oder die zweiten Förderelemente 20 V-förmig, wobei die Spitze der V-förmigen Förderelemente in Richtung der Förderrichtung 22 weist.

Dabei ist die vorliegende Erfindung nicht beschränkt auf die exakte Anzahl der ersten Förderelemente 18 und zweiten Förderelemente 20, gezeigt in Figuren 2A - 4B. Auch von der abwechselnden Anordnung der ersten Förderelemente 18 mit den zweiten Förderelementen 20 kann abgewichen werden, sofern dies erforderlich ist. Insbesondere können weitere Förderelemente vorgesehen sein, durch welche insbesondere weitere Förderflächen definiert werden.

Die Breite B der Förderelemente kann dabei für die ersten Förderelemente 18 und die zweiten Förderelemente 20 gleich gewählt sein. Alternativ hierzu können alle ersten Förderelemente 18 eine gleiche Breite B aufweisen. Alternativ oder zusätzlich hierzu können alle zweiten Förderelemente 20 eine gleiche Breite B aufweisen. Alternativ oder zusätzlich hierzu weisen sowohl alle ersten Förderelemente 18 als auch alle zweiten Förderelemente 20 dieselbe Breite B auf. Dabei ist die Breite B definiert als die kleinste Erstreckung der jeweiligen Förderelemente. So werden durch die ersten Förderelemente 18 und die zweiten Förderelemente 20 Streifen ausgebildet. Insbesondere beträgt die Breite der ersten Förderelemente 18 und/oder der zweiten Förderelemente 20 weniger als 10 cm, bevorzugt weniger als 5 cm und besonders bevorzugt weniger als 1 cm. Insbesondere ist die Breite B gewählt anhand der kleinsten zu befördernden Objekten. Insbesondere ist die Breite B kleiner als die kleinste Dimension der zu befördernden Objekte, sodass ein ungewolltes Verkanten der Objekte zwischen den ersten und zweiten Förderelementen 18, 20 gerade vermieden wird.

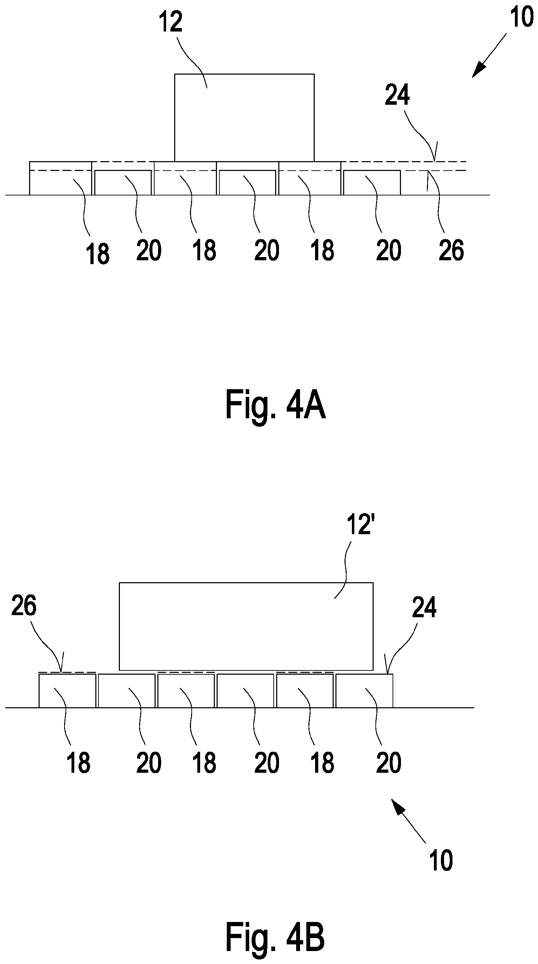

Figuren 4A und 4B zeigen das Wirkungsprinzip der vorliegenden Erfindung. Dabei sind die ersten Förderelemente 18 bewegbar und insbesondere aufgrund des Gewichts des Objekts 12 herunterdrückbar. In Figur 4A wird ein leichtes Objekt 12 über die Vorrichtung 10 befördert. Das Objekt 12 liegt dabei lediglich auf den ersten Förderelementen 18 und wird somit auf der ersten Förderfläche 24 befördert. Das Objekt 12 berührt nicht die zweiten Förderelemente 20, welche auf Höhe der zweiten Förderfläche 26 angeordnet sind. Dabei weist das Objekt 12 der Figur 4A ein Gewicht auf, welches kleiner als ein vorgegebener Grenzwert ist. In Figur 4B weist das Objekt 12' ein Gewicht auf, welches größer oder gleich dem vorgegebenen Grenzwert ist. Durch das erhöhte Gewicht werden die ersten Förderelemente 18 heruntergedrückt in eine Richtung senkrecht zu der ersten Förderfläche 24 bzw. der zweiten Förderfläche 26. Hierdurch sind die ersten Förderelemente 18 auf Höhe der zweiten Förderfläche 26 oder darunter angeordnet. Das schwere Objekt 12' gelangt somit in Kontakt mit den zweiten Förderelementen 20 und wird über die zweiten Förderelementen 20 (in Kombination mit den ersten Förderelementen 18 oder nicht) über die Vorrichtung 10 befördert. Dabei kann durch die zweiten Förderelemente 20 ein anderer Bewegungswiderstand auf das schwere Objekt 12', beispielsweise durch eine Erhöhung der Reibung oder eine Erhöhung eines Rollwiderstandes erzeugt werden, sodass auf das schwere Objekt 12' eine höhere Bremswirkung ausgeübt wird als auf das leichte Objekt 12, welches auf der ersten Förderfläche 24 über die ersten Förderelemente 18 bewegt wird.

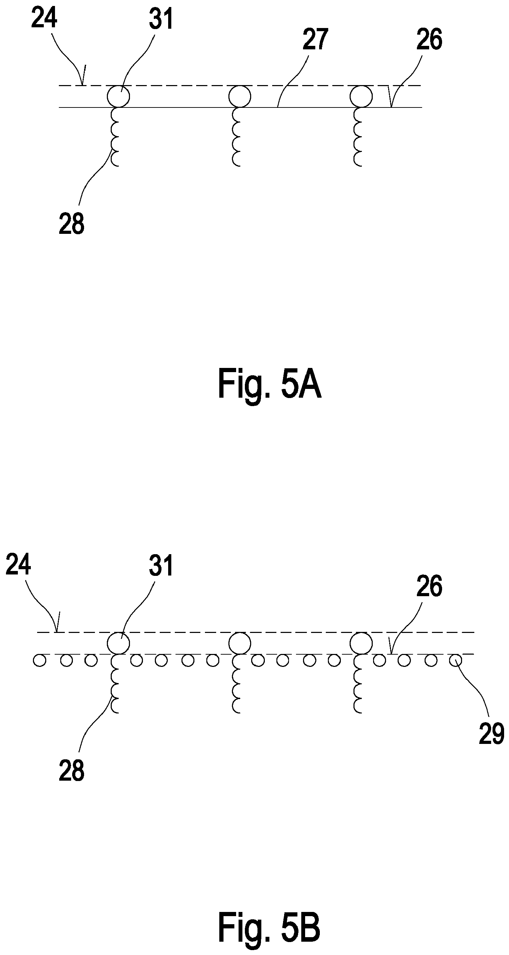

Es wird Bezug genommen auf die Ausführungsform der Figur 5A. Hierbei sind die ersten Förderelemente ausgebildet als Rollen. Dabei definieren die Rollen 31 die erste Förderfläche 24. Eine zweiten Förderfläche 26 wird gebildet durch die zweiten Förderelemente, welche als Gleitfläche 27 ausgebildet sind. Mit den Rollen 31 sind Federelemente 28 verbunden, welche durch das Gewicht des zu transportierenden Objekts herunterdrückbar sind. Ab einem Gewicht des Objekts gleich oder größer einem vorgegebenen Grenzwert kommt das Objekt mit der Gleitfläche auf der zweiten Förderfläche in Kontakt. Hierdurch wirkt die Reibung der Gleitfläche 27 und die Bremswirkung auf das schwere Objekt wird erhöht. Leichte Objekte kommen nicht in Kontakt mit der zweiten Förderfläche 26 und erzeugen somit keine Reibung mit der Gleitfläche 27, sodass diese mit einem geringen Bewegungswiderstand über die Vorrichtung 10 befördert werden.

Es wird Bezug genommen auf die Figur 5B, welche im Unterschied zu der Figur 5A statt einer Gleitfläche 27 Rollen 29 aufweist. Dabei können die Rollen 29 einen größeren Rollwiderstand aufweisen als die Rollen 31 des ersten Förderelements 18, wodurch bei Kontakt zwischen einem schweren Objekt und den Rollen 29 des zweiten Förderelements 20 eine effektive Bremswirkung auf das schwere Objekt übertragen wird.

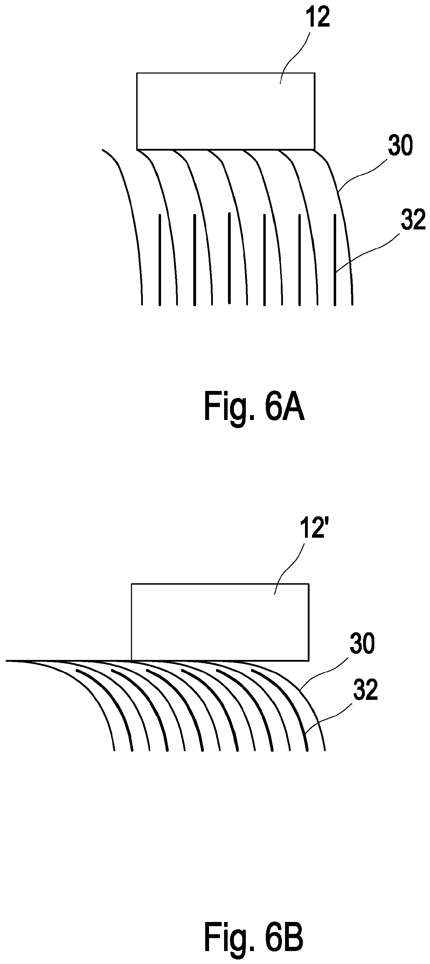

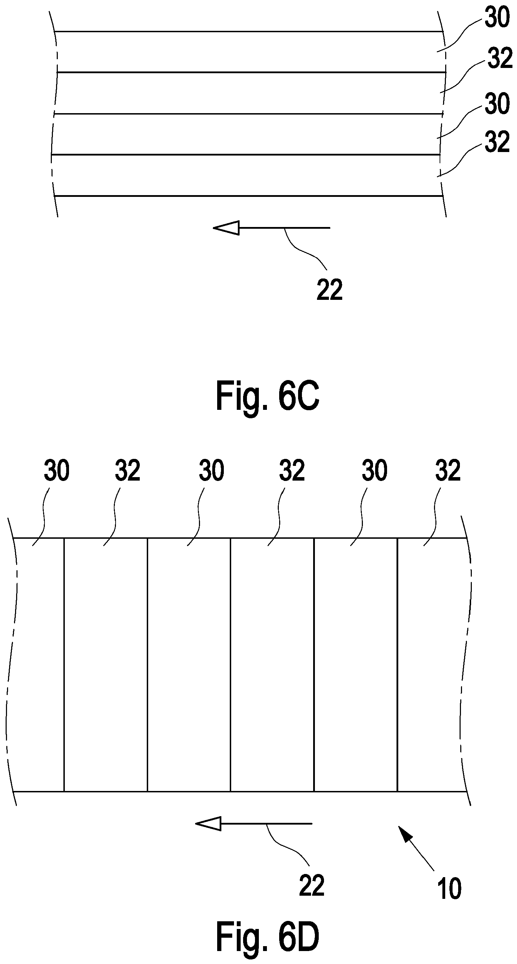

Nachfolgend wird Bezug genommen auf die Figuren 6A bis 6D. In der Ausführungsformen der Figuren 6A - 6C ist das erste Förderelement 18 ausgebildet als eine Vielzahl von Borsten 30 mit einer ersten Länge und das zweite Förderelement 20 ist ausgebildet als eine Vielzahl von zweiten Borsten 32 einer zweiten Länge, wobei die erste Länge größer ist als die zweite Länge. Insbesondere weisen die ersten Borsten 30 ein kleineres E-Modul auf als die zweiten Borsten 32. Ein leichtes Objekt 12, welches ein Gewicht aufweist unterhalb eines vorgegebenen Grenzwerts, gleitet über die ersten Borsten 30 gemäß der Figur 6A. Gemäß der Figur 6B, für ein Objekt 12' mit einem Gewicht oberhalb dieses Grenzwerts, werden die ersten Borsten 30 derart umgebogen, dass das schwere Objekt 12' mit den zweiten Borsten 32 in Kontakt kommen. Dabei können die ersten Borsten 30 und die zweiten Borsten 32 aus einem unterschiedlichen Material hergestellt sein, wodurch die Reibung eines Objekts 12, 12' über die ersten Borsten 30 geringer ist über die zweiten Borsten 32. Statt Borsten können auch entsprechend Lamellen vorgesehen sein. Gemäß der Figur 6C können die ersten Borsten 30 und zweiten Borsten 32 in Streifen entlang der Förderrichtung 22 angeordnet sein. Alternativ hierzu, gemäß der Figur 6D, können die ersten Borsten 30 und die zweiten Borsten 32 in Streifen senkrecht zur Förderrichtung 22 angeordnet sein. Alternativ hierzu sind die ersten Borsten 30 und die zweiten Borsten 32 über die Fläche der Vorrichtung verteilt und insbesondere gleichverteilt.

### Bezugszeichenliste

- 10: Vorrichtung
- 14: Rollenband
- 16: Entnahmepunkt
- 12: Objekt
- 12': Objekt
- 18: erstes Förderelement
- 20: zweites Förderelement
- 22: Förderrichtung
- 24: erste Förderfläche
- 26: zweite Förderfläche
- 27: Gleitfläche
- 28: Federelement
- 29: Rollen
- 30: erste Borsten
- 31: Rolle
- 32: zweite Borsten

## Patentansprüche

1. Vorrichtung zum Transport von Objekten mit
einem ersten Förderelement (18) und
einem zweiten Förderelement (20), wobei das erste Förderelement (18) über das zweite Förderelement (20) hervorsteht und durch das erste Förderelement (18) eine erste Förderfläche (24) gebildet wird und durch das zweite Förderelement (20) eine zweite Förderfläche (26) gebildet wird,
wobei das erste Förderelement (18) in Abhängigkeit vom Gewicht des zu fördernden Objekts (12, 12') beweglich ist, so dass ein erstes Objekt (12) mit einem ersten Gewicht auf der ersten Förderfläche (24) bewegt wird und ein zweites Objekt (12') mit einem zweiten Gewicht auf der zweiten Förderfläche (26) bewegt wird und das zweite Gewicht größer ist als das erste Gewicht.

2. Vorrichtung nach Anspruch 1, **dadurch gekennzeichnet, dass** das erste Förderelement (18) und das zweite Förderelement (20) einen unterschiedlichen Bewegungswiderstand aufweisen und insbesondere das zweite Förderelement (20) einen höheren Bewegungswiderstand aufweist als das erste Förderelement (18).

3. Vorrichtung nach Anspruch 1 oder 2, **dadurch gekennzeichnet, dass** das erste Förderelement (18) und das zweite Förderelement (20) nebeneinander angeordnet in Förderrichtung (22) oder senkrecht zur Förderrichtung (22).

4. Vorrichtung nach einem der Ansprüche 1 bis 3, **dadurch gekennzeichnet, dass** das erste Förderelement (18) und/oder das zweite Förderelement (20) V-förmig insbesondere in Förderrichtung (22) angeordnet ist.

5. Vorrichtung nach einem der Ansprüche 1 bis 4, **gekennzeichnet durch** eine Vielzahl von ersten Förderelementen (18) und/oder eine Vielzahl von zweiten Förderelementen (20), wobei insbesondere die ersten Förderelemente (18) und die zweiten Förderelemente (20) abwechselnd angeordnet sind.

6. Vorrichtung nach einem der Ansprüche 1 bis 5, **dadurch gekennzeichnet, dass** das erste Förderelement (18) und/oder das zweite Förderelement (20) eine Breite aufweist von weniger als 10 cm, bevorzugt weniger als 5 cm und besonders bevorzugt von weniger als 1 cm.

7. Vorrichtung nach einem der Ansprüche 1 bis 6, **dadurch gekennzeichnet, dass** das erste Förderelement (18) vorsteht um weniger als 10 mm, bevorzugt weniger als 5mm und besonders bevorzugt weniger als 2 mm.

8. Vorrichtung nach einem der Ansprüche 1 bis 7, **dadurch gekennzeichnet, dass** das erste Förderelement (18) ein Federelement (28) aufweist, wobei das erste Förderelement (18) entgegen der Federkraft des Federelements (28) herunterdrückbar ist.

9. Vorrichtung nach einem der Ansprüche 1 bis 8, **dadurch gekennzeichnet, dass** das erste Förderelement (18) mindestens eine Rolle (31) aufweist.

10. Vorrichtung nach einem der Ansprüche 1 bis 9, **dadurch gekennzeichnet, dass** das erste Förderelement (18) mindestens eine Lamelle aufweist.

11. Vorrichtung nach einem der Ansprüche 1 bis 10, **dadurch gekennzeichnet, dass** das erstes Förderelement (18) Borsten (30) aufweist.

12. Vorrichtung nach einem der Ansprüche 1 bis 8, **dadurch gekennzeichnet, dass** das zweite Förderelement (20) mindestens eine Rolle (29), mindestens eine Lamelle, Borsten (32) oder eine Gleitfläche (27) aufweist.

13. Vorrichtung nach einem der Ansprüche 1 bis 7, **dadurch gekennzeichnet, dass** das erste Förderelement (18) erste Borsten (30) einer ersten Länge aufweist und das zweite Förderelement (20) zweite Borsten (32) einer zweiten Länge, wobei die ersten Borsten (30) ein E-Modul aufweisen, welches kleiner ist als das E-Modul der zweiten Borsten (32).

14. Vorrichtung nach Anspruch 13, **dadurch gekennzeichnet, dass** die ersten Borsten (30) und die zweiten Borsten (32) über die Förderfläche verteilt angeordnet sind.

15. Sorter zum Sortieren von Objekten, wobei der Sorter mindestens eine Vorrichtung (10) und insbesondere eine Vielzahl von Vorrichtungen (10) nach einem der Ansprüche 1 bis 14 aufweist.
